**Europäisches Patentamt**

**European Patent Office**

**Office européen des brevets**

(19)

(11) Veröffentlichungsnummer: **0 133 526**
**B1**

# (12) EUROPÄISCHE PATENTSCHRIFT

(45) Veröffentlichungstag der Patentschrift:
07.10.87

(51) Int. Cl.⁴: **F 16 D 65/12**

(21) Anmeldenummer: **84109007.9**

(22) Anmeldetag: **30.07.84**

(54) **Bremsscheibe für Industrie- und Fahrzeug-Scheibenbremsen.**

(30) Priorität: **02.08.83 DE 8322558 U**

(43) Veröffentlichungstag der Anmeldung:
**27.02.85 Patentblatt 85/9**

(45) Bekanntmachung des Hinweises auf die Patenterteilung:
**07.10.87 Patentblatt 87/41**

(84) Benannte Vertragsstaaten:
**AT BE DE FR IT**

(56) Entgegenhaltungen:
**DE - A - 1 916 757**
**DE - A - 2 516 324**

(73) Patentinhaber: **KNORR-BREMSE AG, Moosacher Strasse 80 Postfach 401060, D-8000 München 40 (DE)**

(72) Erfinder: **Meier, Josef, St.-Rochus-Strasse 26, D-8044 Unterschleissheim (DE)**

## Beschreibung

Die Erfindung betrifft eine Bremsscheibe für Industrie oder Fahrzeug-Scheibenbremsen, mit beidseitigen Reibflächen, an welche Bremsbeläge anpressbar sind, wobei die Reibflächen wenigstens teilweise erhaben ausgebildet sind und ausgehend von einem Neuzustand um ein Verschleisstiefenmass verschleissbar sind und wobei sich an jede Reibfläche in wenigstens einer radialen Richtung eine wenigstens annähernd in einer Radialebene liegende Oberflächenpartie anschliesst.

Eine die vorstehend erwähnten Merkmale aufweisende Bremsscheibe ist aus der DE-A-1 916 757 bekannt. Die Bremsbeläge sollen hierbei zum Auswechseln parallel zur Bremsscheibenebene abziehbar sein; um dieses Abziehen nicht durch axial über die Bremsscheiben-Reibflächen überstehende, verschleissbedingte Ränder an der Bremsscheibe zu behindern, weist die bekannte Bremsscheibe an ihren Seitenflächen am Umfang einen Teil ihrer Dicke durchgreifenden Ausschnitte auf, wodurch sich zu den Reibflächen zurückversetzte Oberflächenpartien ergeben. Die Ausschnitte erstrecken sich dabei sichelförmig um einen Teil des Umfanges der Bremsscheibe, derart, dass sie sich auf eine die Breite der Bremsbeläge übersteigende Sehnenlänge in die ringförmigen Vertiefungen erstrekken, welche sich durch Verschleiss der Bremsscheibe an ihren Reibflächen ausbilden. Die Ausschnitte bedingen eine Unwucht der Bremsscheibe, welche nur durch weitere, aufwendige Massnahmen zu beheben ist. Ausserdem können an der Bremsscheibe durch Verschleiss axial vorspringende Randpartien entstehen, welche sich nur um einen Teil des Bremsscheibenumfanges erstrecken, variable Unwuchten bedingen und durch ihre scharfkantigen Enden gefährlich sind.

Eine weitere Bremsscheibe der vorstehend genannten Art ist der DE-A-25 16 324 entnehmbar, bei welcher sich die Reibflächen auf in Aufsicht ovalen, von der Oberflächenpartie vorspringenden Erhebungen befinden. Diese der Geräuschminderung beim Bremsen dienende Ausbildung der Bremsscheibe weist den Mangel auf, dass die Reibflächen der Bremsscheibe in radialer Richtung wesentlich schmaler als die Bremsbeläge sind, wodurch beim Bremsen sich hohe Flächenpressungen ergeben oder nur geringe Bremsleistungen erreichbar sind und wodurch zudem das Verschleissvolumen der Bremsscheibe wesentlich vermindert wird, die Bremsscheibe also relativ häufig ausgetauscht werden muss.

Bei üblichen Bremsscheiben befindet sich die Reibfläche in einer Ebene mit sich radial an sie anschliessenden Oberflächenpartien der Bremsscheibe; hieraus ergibt sich, dass sich die Bremsbeläge im Laufe vieler Bremsungen in die Bremsscheibe einarbeiten, bis die Bremsscheibe um ein maximal zulässiges Mass verschlissen ist und ausgetauscht werden muss. Dieses Mass, um welches sich die Reibflächen beim Verschleiss der Bremsscheibe vom Neuzustand bis zum vollständigen Verschleisszustand in die Bremsscheibe axial hineinverlagert, wird im folgenden Verschleisstiefenmass genannt. Bei wenigstens teilweise verschlissener Bremsscheibe befinden sich also die Reibflächen in ringförmigen Vertiefungen, bezogen auf die sie umgebenden Flächenpartien, wodurch sich beim Belagwechsel von verschlissenen zu neuen Bremsbelägen Schwierigkeiten ergeben können: Die neuen Bremsbeläge stimmen in ihren radialen Abmessungen nicht genau mit den verschlissenen Bremsbelägen überein und müssen sich somit erst unter grossem Bremshub und geringer Bremswirkung in die Ringvertiefungen, in welchen die Reibflächen der Bremsscheiben liegen, einarbeiten. Es war daher häufig üblich, Bremsscheiben in bestimmten Abnutzungsstadien abzudrehen, d.h. die axial überstehenden Oberflächenpartien derart abzudrehen, dass diese mit den eingearbeiteten Reibflächen wieder in annähernd eine Radialebene kamen. Dieses Abdrehen der Bremsscheiben erfordert beachtlichen Aufwand.

Es ist Aufgabe der Erfindung, eine Bremsscheibe der eingangs genannten Art derart auszugestalten, dass sie bei üblicher Flächenpressung, Bremsleistung und Verschleissvolumen während ihrer ganzen Betriebszeit keinerlei Nacharbeit, insbesondere kein Abdrehen benötigt.

Diese Aufgabe wird nach der Erfindung dadurch gelöst, dass bei einer Bremsscheibe der eingangs genannten Art im Neuzustand sich die Reibflächen auf um etwa die halbe Grösse des Verschleisstiefenmasses relativ zur Oberflächenpartie axial vorspringenden, kreisringförmigen Erhebungen befinden, wobei die Oberflächenpartie sich um den ganzen Umfang der Reibfläche erstreckt und wobei die Erhebungen eine radiale Breite aufweisen, die höchstens gleich der radialen Breite der Bremsbeläge ist.

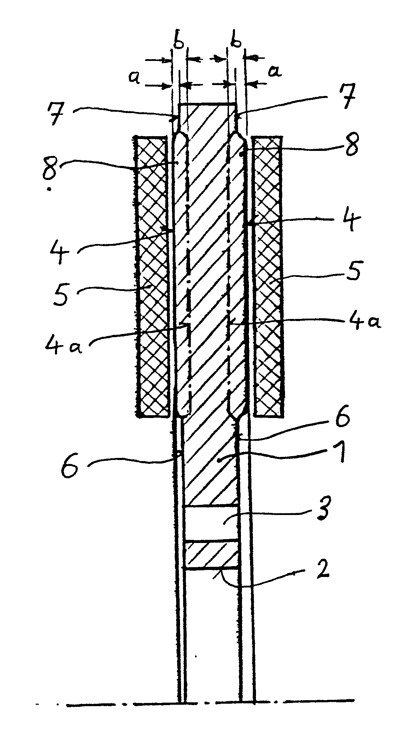

In der Zeichnung ist als Ausführungsbeispiel für die Erfindung eine Bremsscheibe mit an diesen anpressbaren Bremsbelägen im Schnitt schematisch dargestellt.

Eine ringscheibenförmige Bremsscheibe 1 weist nahe ihrer zentrischen Axialbohrung 2 Befestigungsbohrungen 3 auf, durch welche sie mittels nicht dargestellten Schrauben an einem abzubremsenden, ebenfalls nicht dargestellten Teil befestigbar ist. Die Bremsscheibe 1 weist beiderseits kreisringförmige Reibflächen 4 auf, an welche Bremsbeläge 5 anpressbar sind. An die Reibflächen 4 schliessen sich nach radial aussen und radial innen Oberflächenpartien 6, 7 der Bremsscheibe an, welche sich in jeweils einer Radialebene befinden. Bezogen auf diese Oberflächenpartien 6, 7 befinden sich die Reibflächen 4 auf axial vorspringenden, kreisringförmigen Erhebungen 8; die Höhe dieser Erhebungen 8 weist, bezogen auf die Oberflächenpartien 6 und 7, das Mass a auf. Die radiale Erstreckung der Erhebungen 8 und damit der Reibflächen 4 entspricht höchstens der radialen Erstreckung der Bremsbeläge 5, vorzugsweise überragen die Bremsbeläge die Reibflächen 4 bzw. Erhebungen 8 in radialer Richtung geringfügig, wie es aus der Zeichnung ersichtlich ist. Die Erhebungen 8 müssen nicht wie dargestellt annähernd gestuft von den Oberflächenpartien 6, 7 abgesetzt sein, es ist auch ein allmählicher Übergang beispielsweise mittels einer flachen Kegelringfläche oder dergl. möglich, deren der Erhebung 8 abgewandte Randzone dann die Oberflächenpartie 6, 7 darstellt.

In dem vorstehend beschriebenen und aus der Zeichnung ersichtlichen Zustand befindet sich die Bremsscheibe in ihrem Neuzustand. Während des Betriebes der Bremsscheibe verschleissen die Erhebungen 8, die Reibflächen 4 verlagern sich somit durch den Verschleiss allmählich zur radialen Bremsscheibenmittelebene hin. Bei etwa um die Hälfte des maximal zulässigen Verschleisses verschlissener Bremsscheiben befinden sich die Reibflächen 4 etwa in einer Radialebene mit den Oberflächenpartien 6 und 7; dieser Verschleisszustand der Bremsscheibe ist nicht dargestellt. Während der weiteren Betriebszeit der Bremsscheibe arbeiten sich die Bremsbeläge 5 in die Bremsscheibe 1 ein, bis im Verschleissenzustand der Bremsscheibe 4 in ringförmigen Vertiefungen der Bremsscheibe 1 befinden; für den voll verschlissenen Zustand der Bremsscheibe 1 ist die Lage der Reibflächen mit den strichpunktierten Linien 4a dargestellt. Während des Verschleisses der Bremsscheibe 1 verlagern sich also die Reibflächen von ihrer unter dem Bezugszeichen 4 dargestellten Lage in die unter den Bezugszeichen 4a dargestellte Lage, der Abstand zwischen diesen beiden Lagen beträgt jeweils das Mass b, welches somit das erwähnte, für die Bremsscheibe 1 zulässige Verschleisstiefenmass darstellt. Bei der Bremsscheibe 1 beträgt nun erfindungsgemäss das Mass a die Hälfte des Verschleisstiefenmasses b, d.h. im Neuzustand der Bremsscheibe 1 befinden sich die Reibflächen 4 um das gleiche Mass a axial vor den Oberflächenpartien 6, 7, um welches sie sich bei voll verschlissener Bremsscheibe hinter diesen Oberflächenpartien befinden. Hieraus ergibt sich, dass im voll verschlissenen Zustand der Bremsscheibe die Reibflächen sich in ringförmigen Vertiefungen befinden, deren Tiefe nur dem halben Verschleisstiefenmass entspricht und somit so gering ist, dass auch kurz vor Erreichen dieses vollen Verschleisszustandes der Bremsscheibe ein Bremsbelagwechsel ohne weiteres möglich ist, insbesondere ohne Abdrehen der Bremsscheibe 1 und damit ohne Beseitigen der erwähnten, flachen Vertiefungen die neuen Bremsbeläge 5 rasch und mit nur geringem, vernachlässigbaren Einschleifverlust mit der Bremsscheibe 1 zusammenzuwirken vermögen. Es ergibt sich somit, dass die nach der Erfindung ausgebildete Bremsscheibe während ihrer ganzen Betriebszeit keiner Nacharbeit bzw. Abdrehung bedarf, trotzdem aber übliches Verschleissvolumen und damit übliche Standzeit bei bester Materialausnutzung gewährleistet.

Die Bremsscheibe ist besonders für Industrie-Scheibenbremsen geeignet, es ist jedoch auch möglich, die Bremsscheibe für Fahrzeug-Scheibenbremsen einzusetzen. Selbstverständlich kann die Bremsscheibe im übrigen in üblicher Weise ausgebildet sein, insbesondere kann sie eine von der dargestellten und beschriebenen Ausführungsform abweichende Nabenausbildung erfahren, sie kann mit radialen, üblichen Lüftungskanälen versehen werden und sie kann auch radial mittig geteilt mit ihren beiden Hälften zu den beiden Seiten eines abzubremsenden Rades angeordnet werden.

## Patentanspruch

1. Bremsscheibe (1) für Industrie oder Fahrzeug-Scheibenbremsen, mit beidseitigen Reibflächen (4), an welche Bremsbeläge (5) anpressbar sind, wobei die Reibflächen (4) wenigstens teilweise erhaben ausgebildet sind und ausgehend von einem Neuzustand um ein Verschleisstiefenmass (Mass b) verschleissbar sind und wobei sich an jede Reibfläche (4) in wenigstens einer radialen Richtung eine wenigstens annähernd in einer Radialebene liegende Oberflächenpartie (6, 7) anschliesst, dadurch gekennzeichnet, dass im Neuzustand der Bremsscheibe (1) sich die Reibflächen (4) auf um etwa die halbe Grösse des Verschleisstiefenmasses (Mass b) relativ zur Oberflächenpartie (6, 7) axial vorspringenden, kreisringförmigen Erhebungen (8) befinden, wobei die Oberflächenpartie (6, 7) sich um den ganzen Umfang der Reibfläche (4) erstreckt und wobei die Erhebungen (8) eine radiale Breite aufweisen, die höchstens gleich der radialen Breite der Bremsbeläge (5) ist.

## Revendication

1. Disque de frein (1) pour des freins à disque utilisables dans l'industrie ou dans des véhicules, avec des surfaces de friction (4) sur les deux côtés, et contre lesquelles des garnitures de frein (5) sont susceptibles d'être appliquées, du type dans lequel les surfaces de friction (4) sont, au moins partiellement, réalisées de manière à présenter des parties saillantes et sont susceptibles d'usure d'une quantité de profondeur d'usure (quantité b) à partir de leur état neuf, et dans lequel à chaque surface de friction (4), et au moins dans une direction radiale, se raccorde une partie de surface excédentaire (6, 7) qui se situe au moins approximativement dans un plan radial, caractérisé par le fait qu'à l'état neuf du disque de frein (1), les surfaces de friction (4) se situent sur des parties saillantes (8) ayant la forme d'anneaux circulaires et s'étendant axialement, par rapport à la partie de surface excédentaire (6, 7), sur environ la moitié de la valeur de la quantité de profondeur d'usure (quantité b), la partie de surface excédentaire (6, 7) s'étendant sur toute la périphérie de la surface de friction (4) et les parties saillantes (8) possédant une largeur radiale qui, au plus, est égale à la longueur radiale des garnitures de frein (5).

## Claim

1. Brake disc (1) for industrial or vehicle-mounted disc brakes with friction surfaces (4) on both sides, against which surfaces brake pads (5) can be pressed, said friction surfaces (4) having at least partially a convex configuration and, referred to their new condition, allowing a wear in axial direction by a wearing amount (dimension b), each friction surface (4) continuing in at least one radial direction into a surface area (6, 7), situated at least approximately in a radial plane, wherein the friction surfaces (4), referred to the new condition of brake disc (1), are located on annular elevations (8), projecting in axial direction by about half the axial wearing amount (dimension b), relative to the surface area (6, 7), which extends around the entire circumference of the friction surface (4), the elevations (8) having a radial width which is at the most equal to the radial width of the brake pads (5).